# EUROPÄISCHE PATENTSCHRIFT

(11) **EP 1 725 436 B1**
(45) Veröffentlichungstag und Bekanntmachung des Hinweises auf die Patenterteilung: **15.09.2010**
(21) Anmeldenummer: 05707740.6
(22) Anmeldetag: 05.01.2005
(51) Int. Cl.: B60R 21/01

(54) **INSASSENSCHUTZVORRICHTUNG**
OCCUPANT PROTECTION DEVICE
DISPOSITIF DE PROTECTION D'OCCUPANT

(30) Priorität: 26.02.2004 DE 102004009300
(43) Veröffentlichungstag der Anmeldung: 29.11.2006
(73) Patentinhaber: Robert Bosch GmbH, 70442 Stuttgart (DE)
(72) Erfinder: MATTES, Bernhard, 74343 Sachsenheim (DE); STUMPP, Hans-Peter, 71706 Markgroeningen (DE); NITSCHKE, Werner, 71254 Ditzingen (DE); SCHUMACHER, Hartmut, 71691 Freiberg (DE); WOTTRENG, Walter, Gunma 370-2 (JP); GUETTLER, Hans, 74199 Untergruppenbach (DE); MORITZ, Rainer, 70794 Filderstadt (DE); HERRMANN, Thomas, 74613 Oehringen (DE); STUETZLER, Frank-Juergen, Farmington Hills, Michigan 48331 (US); VOGT, Alexander, 70499 Stuttgart (DE); BALZER, Knut, 71717 Beilstein (DE); LICH, Thomas, 71409 Schwaikheim (DE); GROEGER, Ulrike, 70499 Stuttgart (DE); KUTTENBERGER, Alfred, 71696 Moeglingen (DE); GROESCH, Lothar, Farmington Hills, Michigan 48331 (US); SCHMID, Michael, 70806 Kornwestheim (DE); KROENINGER, Mario, 77815 Buehl (DE)
(86) Internationale Anmeldenummer: PCT/EP2005/050034
(87) Internationale Veröffentlichungsnummer: WO 2005/082678

(56) Entgegenhaltungen:
- DE-A1- 19 526 334
- DE-A1- 19 740 020
- US-A- 5 232 243
- US-A- 5 957 490

## Beschreibung

### Stand der Technik

Die Erfindung betrifft eine Insassenschutzvorrichtung, insbesondere für ein Kraftfahrzeug, mit mindestens einem Airbag, mit mindestens einem Gasgenerator zum Befüllen des Airbags, mit einem Airbagsteuergerät zum Aktivieren des Airbags, mit Mitteln zum Erfassen der Entfaltungsgeschwindigkeit des Airbags und mit Mitteln zum Regeln der Befüllungsmenge des Airbags unter Berücksichtigung seiner Entfaltungsgeschwindigkeit.

Airbags in einem Kraftfahrzeug sind in der Regel einem bestimmten Sitz bzw. dem darauf befindlichen Insassen zugeordnet. Die Abbremswirkung eines aktivierten Airbags ist üblicherweise so ausgelegt, dass sich das Verletzungsrisiko für den entsprechenden Insassen in der gegebenen Unfallsituation minimiert, sofern sich der Insasse im Moment der Airbagauslösung in einer aufrechten Position befindet und von den vorhandenen Sicherheitsgurten gehalten, an der Rücklehne des Sitzes angelehnt ist. Unter diesen Voraussetzungen sollte sich der Insasse zunächst noch in einer bestimmten Entfernung vom vollaufgeblasenen Airbag befinden, bevor er in diesen hineinfällt. Es kann jedoch auch der Fall eintreten, dass sich der Insasse zum Zeitpunkt des Unfalls in einer anderen Position befindet, weil er sich beispielsweise gerade nach vorne lehnt. Solche sogenannten "Out-of-Position"(OoP)-Situationen können zu sehr schweren Verletzungen des betroffenen Insassen führen, wenn der Insasse von dem sich entfaltenden Airbag getroffen wird und die Befüllung des Airbags ungeregelt erfolgt. Deshalb wurden bereits verschiedene Konzepte zur Erfassung der Entfaltungsgeschwindigkeit eines Airbags entwickelt, um die Befüllungsmenge zu reduzieren, falls sich ein "Hindernis" im Entfaltungsweg des Airbags befindet.

In der internationalen Patentanmeldung WO 03/039918 A1 wird eine Insassenschutzvorrichtung beschrieben, die einen Airbag mit einer Fülleinrichtung zum Aufblasen des Airbags umfasst Die Entftaltungsgeschwindigkeit des Airbags wird hier kontaktlos erfasst. Dazu sind eine Sende-/Empfangseinrichtung für elektromagnetische Wellen und eine sogenannte Abfrageeinheit vorgesehen, die an der Airbaghülle angeordnet ist. Während sich der Airbag entfaltet, sendet die Sende-/Empfangseinrichtung elektromagnetische Wellen an die sich mit der Airbaghülle bewegende Abfrageeinheit Das daraufhin von der Abfrageeinheit an die Sende-/Empfangseinrichtung zurückgesendete Antwortsignal wird dann von einer Auswerbeeinheit ausgewertet, die mit der Sende-/Empfangseinrichtung verbunden ist.

Die in der internationalen Patentanmeldung WO 03/039918 A1 beschriebenen Maßnahmen ermöglichen die Regelung der Befüllungsmenge eines Airbags in Abhängigkeit von dessen Entfaltungsgeschwindigkeit Allerdings gestaltet sich eine entsprechend gesteuerte Befüllung eines Airbags in der Praxis problematisch, da die Aufblasdauer insgesamt nur ca. 30 ms betragen darf.

Aus US 5,957,490 ist eine Anordnung, gemäß der Oberbegriff des Patentanspruchs 1, zum Schutz eines Fahrzeuginsassen bekannt. Dabei werden Klappventile angesteuert, um bei der Detektion eines Hindernisses für den sich expandierenden Airbag Gas vom Airbag abzuleiten. Aus US 5,232,243 ist es bekannt, einen Insassensensierungsapparat zu verwenden, wobei ein Film mit einer elektrisch veränderlichen Charakteristik im Sitz angeordnet ist. Mit Signalen von diesem Film wird der Insasse erkannt. Aus DE 197 40 020 A1 ist eine Einrichtung und ein Verfahren einer Gassackanordnung in einem Kraftfahrzeug bekannt. Dabei kann die Gassackanordnung auf unterschiedliche Volumenstufen aufgeblasen werden. Das Volumen wird nachgestellt, nachdem das Aufblasen des Gassacks eingeleitet wurde, abhängig von aktuellen Daten der Aufprallerkennungseinrichtung und/oder von aktuellen Daten einer Einrichtung zur Insassen- oder Objekterkennung.

### Vorteile der Erfindung

Mit der vorliegenden Erfindung wird eine Insassenschutzvorrichtung der eingangs genannten Art vorgeschlagen, die konstruktiv einfach zu realisierende Mittel für eine geregelte Befüllung des Airbags in Abhängigkeit von seiner Entfaltungsgeschwindigkeit umfasst.

Die erfindungsgemäße Insassenschutzvorrichtung ist dazu mit mindestens einem Abströmventil ausgestattet, das zwischen dem Gasgenerator und dem Airbag angeordnet ist, wobei die Betätigungsmittel für den Verschlusses des Abströmventils steuerbar sind.

Es ist erkannt worden, dass über ein solches steuerbares, nach außen wirkendes Abströmventil einfach eine definierte Menge des Druckgases abgeleitet werden kann, wenn ein Hindernis im Entfaltungsweg des Airbags detektiert wird, bzw. wenn die Entfaltungsgeschwindigkeit des Airbags auf ein solches Hindernis schließen lässt. Die Befüllungsmenge für den Airbag lässt sich auf diese Weise einfach unter Berücksichtigung der Entfaltungsgeschwindigkeit bzw. der Größe und Position eines Hindernisses im Entfaltungsweg regeln.

Die meisten Insassenschutzvorrichtungen sind mit einem zentralen Airbagsteuergerät ausgestattet, dem alle möglichen Informationen über den Fahrzeugzustand, die Sitzbelegung, die Verkehrssituation, etc. zur Verfügung gestellt werden, um Gefahrensituationen möglichst zuverlässig zu erkennen und dann geeignete Rückhaltemittel zu aktivieren. In diesem Fall erweist es sich oftmals als vorteilhaft, wenn auch die Mittel zum Erfassen der Entfaltungsgeschwindigkeit des Airbags und die Betätigungsmittel für den Verschluss des Abströmventils an das Airbagsteuergerät angeschlossen sind. Zum einen verfügt das Airbagsteuergerät über geeignete Mittel zum Auswerten von Messdaten, die auch für die Ermittlung und Interpretation der Entfaltungsgeschwindigkeit genutzt werden können, zum anderen können die dem Airbagsteuergerät zur Verfügung stehenden Informationen, beispielsweise Informationen über die Sitzbelegung, auch bei der Interpretation der ermittelten Entfaltungsgeschwindigkeit und deren Regelung berücksichtigt werden. Außerdem können die Signallaufzeiten zwischen der Messdatenerfassung bei der Airbagentfaltung und der Steuerung des Abströmventils mit Hilfe eines zentralen Airbagsteuergeräts minimiert werden.

Einerseits muss der Verschluss des Abströmventils so ausgelegt sein, dass bei geschlossenem Abströmventil eine hinreichend große Drosselwirkung für das aus dem aktivierten Gasgenerator strömende Gas erzielt wird, so dass der Airbag mit maximaler Geschwindigkeit voll aufgeblasen wird. Andererseits muss die Abströmöffnung so dimensioniert sein, dass bei geöffnetem Ventil eine signifikante Gasmenge nach außen abströmen kann, so dass der Airbag nicht voll aufgeblasen wird. Um die Entfaltungsgeschwindigkeit bzw. die Befüllungsmenge des Airbags überhaupt regeln zu können, muss sich außerdem ein sehr schneller Ventilhub realisieren lassen. In diesem Zusammenhang erweist es sich als erfindungskennzeichnet wenn die Betätigungsmittel für den Verschluss des Abströmventils einen Piezosteller in Verbindung mit einer mechanischen oder hydraulischen Hebeleinrichtung umfassen. In einer ebenfalls vorteilhaften Variante der erfindungsgemäßen Insassenschutzvorrichtung wird der Verschluss des Abströmventils mit Hilfe eines Elektromagneten betätigt.

Grundsätzlich lässt sich die erfindungsgemäße Insassenschutzvorrichtung mit jeder Art von Gasgenerator realisieren, wobei bei der Konzeption des Anströmventils die physikalischen und chemischen Eigenschaften, insbesondere die Ausströmgeschwindigkeit, des jeweils verwendeten Gases bzw. Gasgemischs zu berücksichtigen sind. In einer besonders einfach zu handhabenden und zudem kostengünstigen Variante ist die erfindungsgemäße Insassenschutzvorrichtung mit einem Kaltgasgenerator ausgestattet, der mit einer unter Druck stehenden Edelgasmischung befüllt ist und mit einer pyrotechnischen Ladung zum Zerstören der Berstscheibe ausgestattet ist.

Die Verwendung einer Edelgasmischung zum Aufblasen des Airbags erweist sich auch im Hinblick auf die Erfassung der Entfaltungsgeschwindigkeit als vorteilhaft. Da Edelgasmischungen sehr sauber sind, kann sich in einem solchen Medium Licht ungehindert ausbreiten. Optische Messverfahren zum Ermitteln der Entfaltungsgeschwindigkeit liefern daher sehr zuverlässige Ergebnisse. Eine vorteilhafte Variante der erfindungsgemäßen Insassenschutzvorrichtung umfasst dazu eine Sende-/Empfangseinrichtung, mit der optische Signale, beispielsweise in Form von gepulstem Infrarotlicht, in den sich entfaltenden Airbag ausgesendet werden. Außerdem ist die Innenseite des Airbags zumindest bereichsweise mit einer lichtreflektierenden Beschichtung versehen, so dass die optischen Signale reflektiert und dadurch an die Sende-/Empfangseinrichtung zurückgesendet werden. Die Entfaltungsgeschwindigkeit des Airbags kann dann einfach durch Laufzeitmessung, unter Ausnutzung des Doppler-Effekts oder eines Triangulationsverfahrens ermittelt werden.

### Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnungen verwiesen.
- Fig. 1: zeigt ein Blockschaltbild einer erfindungsgemäßen Insassenschutzvorrich- tung,
- Fig. 2: zeigt eine Prinzipdarstellung der in Fig. 1 dargestellten Insassenschutzvor- richtung,
- Fig. 3: zeigt eine Draufsicht auf den Verschluss des in Fig. 2 dargestellten Abströmventils und
- Fig. 4: zeigt einen Piezosteller als Betätigungsmittel für den in Fig. 3 dargestellten Verschluss eines Abströmventils.

### Beschreibung des Ausführungsbeispiels

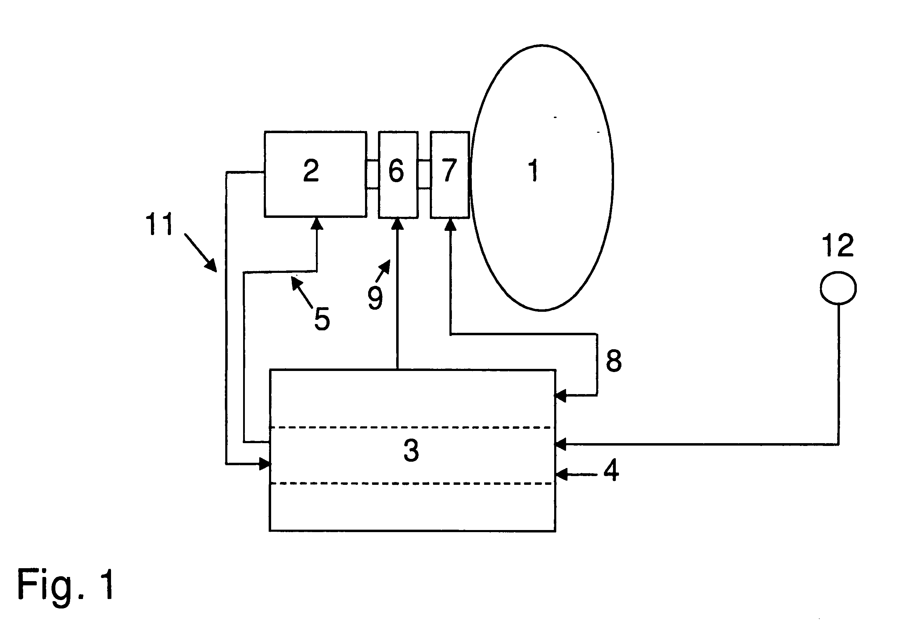

Das in Fig. 1 dargestellte Gesamtsystem einer Insassenschutzvorrichtung für ein Kraftfahrzeug umfasst einen Airbag 1, der im Bedarfsfall mit Hilfe eines Gasgenerators 2 befüllt wird. Der Gasgenerator 2 ist an ein zentrales Airbagsteuergerät 3 angeschlossen, dem alle zur Verfügung stehenden Daten über den Fahrzeugzustand, die Fahr- und Verkehrssituation, die Sitzbelegung, etc. zugeführt werden, was durch den Pfeil 4 angedeutet wird. Durch Auswertung dieser Informationen kann das Airbagsteuergerät 3 Gefahrensituationen frühzeitig erkennen und beispielsweise die Crash-Schwere und Crash-Art klassifizieren, um geeignete Präventionsmaßnahmen zu initiieren. So kann das Airbagsteuergerät 3 in bestimmten Gefahrensituationen den Gasgenerator 2 über eine Signalleitung 5 aktivieren, um den Airbag 1 auszulösen.

Um die Funktionsfähigkeit des Gasgenerators 2 zu gewährleisten, wird im hier dargestellten Ausführungsbeispiel der Gasdruck im Gasgenerator 2 kontinuierlich überwacht. Dazu werden die entsprechenden Daten über eine Signalleitung 11 an das Airbagsteuergeräts 3 übertragen. Des Weiteren ist das Airbagsteuergerät 3 mit dem Mikrophon 12 einer im Kraftfahrzeug installierten Freisprecheinrichtung verbunden, die im Falle eines Unfalls zusammen mit einem Crashrecorder aktiviert wird. Auf diese Weise können der Unfallhergang sowie das Auslösen der Rückhaltemittel in Form von akustischen Signalen dokumentiert werden.

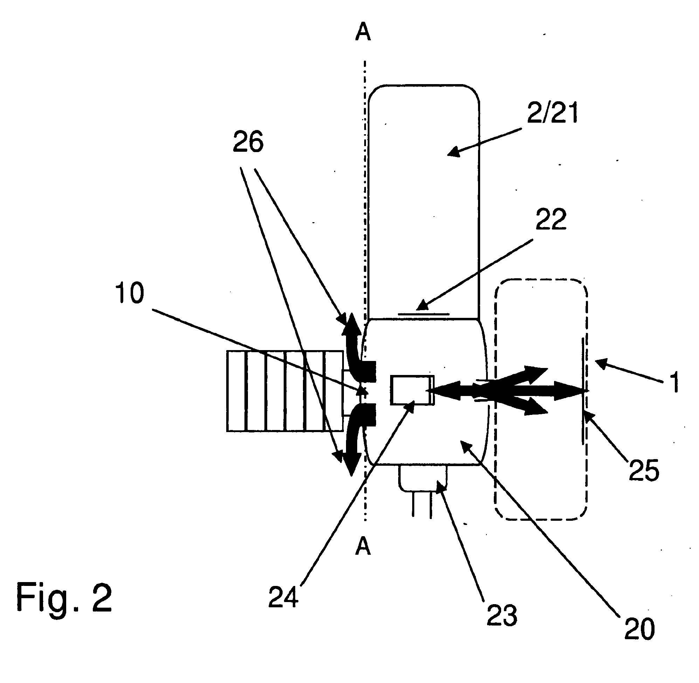

Der Gasgenerator 2 ist über ein Verbindungsmodul 6 und ein dem Airbag 1 vorgeschaltetes Messmodul 7 an den Airbag 1 angeschlossen. Das Messmodul 7 dient zur Erfassung der Entfaltungsgeschwindigkeit des Airbags 1 und wird in Verbindung mit Fig. 2 näher erläutert. Die Auswertung der Messwerte kann im Messmodul 7 erfolgen und/oder im Airbagsteuergerät 3, das über eine bidirektionale Leitung 8 mit dem Messmodul 7 verbunden ist.

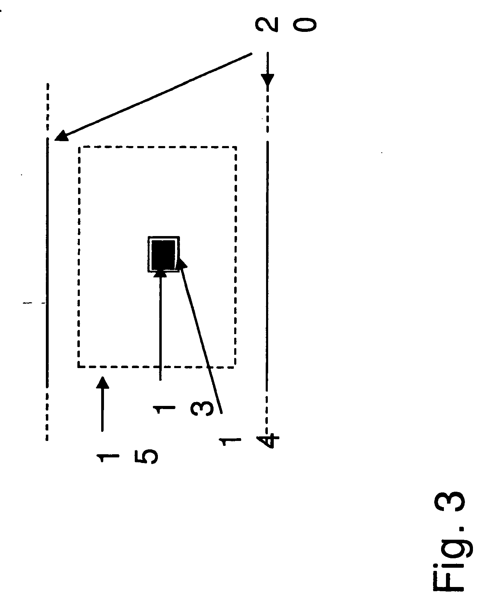

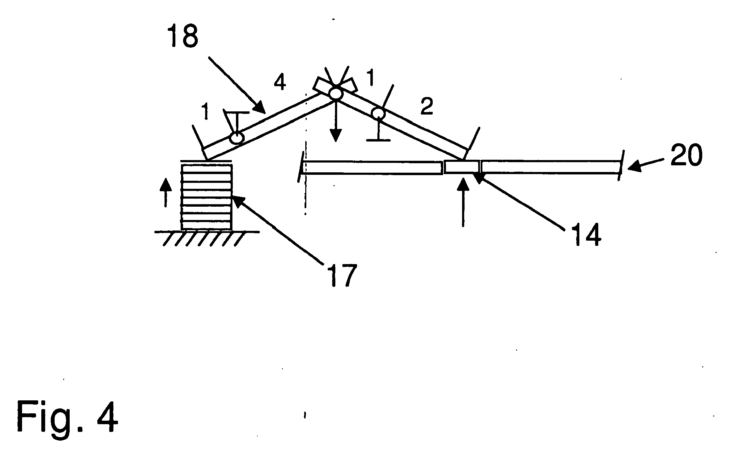

Die Befüllungsmenge des Airbags 1 lässt sich mit Hilfe des Verbindungsmoduls 6 regeln, das dazu mindestens ein Abströmventil 10 umfasst, was in Fig. 2 dargestellt ist. Der Verschluss des Abströmventils ist über eine Signalleitung 9 vom Airbagsteuergerät 3 ansteuerbar. Das Airbagsteuergerät 3 übernimmt im hier dargestellten Ausführungsbeispiel die Regelung der Befüllungsmenge und berücksichtigt dabei die Entfaltungsgeschwindigkeit des Airbags 1, die mit Hilfe des Messmoduls 7 ermittelt worden ist. Die Betätigungsmittel für den Verschluss des Abströmventils 10 werden in Verbindung mit den Figuren 3 und 4 näher erläutert.

Wesentlich für die Funktionsweise der erfindungsgemäßen Insassenschutzvorrichtung ist die Anordnung des Abströmventils 10 zwischen dem Gasgenerator 2 und dem Airbag 1. In Fig. 2 ist eine vorteilhafte Realisierungsform für eine solche Anordnung dargestellt. Das Abströmventil 10 ist hier in der Gehäusewandung eines als Verbindungsmodul 6 dienenden Gehäuseteils 20 ausgebildet. Der Airbag 1 ist über eine dem Abströmventil 10 gegenüberliegende Öffnung in der Gehäusewandung an das Gehäuseteil 20 angeschlossen. Fig. 2 zeigt den Airbag 1 in zusammengefaltetem Zustand.

Als Gasgenerator 2 dient ein Druckbehälter 21, der mit einer geeigneten Edelgasmischung befüllt ist. Bei der Edelgasmischung kann es sich beispielsweise um eine Mischung aus 94% Argon und 6% Helium handeln, die unter einem Druck von ca. 500 bar steht, oder auch um eine Argon-Stickstoff-Mischung. Der Gasgenerator 2 ist ebenfalls an das Gehäuseteil 20 angeschlossen, so dass der Verschluss des Druckbehälters 21, der durch eine Berstscheibe 22 gebildet wird, über einer weiteren Öffnung in der Gehäusewandung angeordnet ist. Die Berstscheibe 22 kann mit Hilfe einer entsprechend dimensionierten pyrotechnischen Ladung 23, die gegenüber dem Gasgenerator 2 an der Gehäusewandung angeordnet ist, zerstört werden. Dann strömt das unter Druck stehende Gas aus dem Druckbehälter 21 durch das Gehäuseteil 20 einerseits in den angeschlossenen Airbag 1 und kann andererseits über das Abströmventil 10 nach außen abfließen, sofern dieses geöffnet ist.

Die Messung der Entfaltungsgeschwindigkeit des Airbags 1, genauer gesagt der Bewegungsgeschwindigkeit der dem Insassen zugewandten Airbag-Oberseite, erfolgt hier optisch. Dazu ist im Innern des Gehäuseteils 20 eine Sende-/Empfangseinrichtung 24 angeordnet, mit der optische Signale, beispielsweise gepulstes Infrarotlicht, in den sich entfaltenden Airbag 1 ausgesendet werden. Diese Signale werden an der Innenseite des Airbags 1 reflektiert, die dazu zumindest bereichsweise eine lichtreflektierenden Beschichtung 25 aufweist. Da die in den Airbag 1 einströmende Edelgasmischung sehr sauber ist, können sich optische Signale hier ungehindert ausbreiten. Aus der Änderung der "Time of Flight" des reflektierten gepulsten Infrarotlichts lässt sich die Bewegungsgeschwindigkeit der dem Insassen zugewandten Airbag-Oberseite berechnen. Selbstverständlich kann die Ehtfaltungsgeschwindigkeit auch mit anderen optischen Messverfahren ermittelt werden, bei denen beispielsweise der Dopplereffekt ausgenutzt wird oder ein Triangulationsverfahren zum Einsatz kommt.

Nimmt die Entfaltungsgeschwindigkeit ab, bevor der Airbag vollständig aufgeblasen ist, so deutet dies auf ein Hindernis im Entfaltungsweg des Airbags hin. In der Regel handelt es sich in diesem Fall um eine Out-of-Position-Situation. Um zu verhindern, dass der betroffene Insasse durch den sich entfaltenden Airbag verletzt wird, kann nun mit Hilfe des Abströmventils 10 ein Teil des aus dem Gasgenerator 2 ausströmenden Füllgases nach außen abgeleitet werden, was durch die Pfeile 26 angedeutet wird. Dennoch soll der Airbag 1 einen Aufprall des Insassen möglichst gut dämpfen. Deshalb wird die Menge des nach außen abgeleiteten Füllgases so geregelt, dass das Verletzungsrisiko für den Insassen insgesamt möglichst minimiert wird.

Wie bereits erwähnt, zeigt Fig. 3 eine Draufsicht auf den Verschluss des in Fig. 2 dargestellten Abströmventils 10, was einer Draufsicht auf die mit AA bezeichnete Schnittebene entspricht. Das Abströmventil 10 ist hier in Form einer Verschlussblende in der Wandung des Verbindungsteils 20 realisiert mit einer im Wesentlichen quadratischen Öffnung 13 und einem entsprechend der Öffnung 13 dimensionierten Verschlussteil 14, das mit Hilfe von Betätigungsmitteln 15 in der Öffnung 13 gehalten wird oder - bei entsprechender Ansteuerung der Betätigungsmittel 45 - von der Öffnung 13 mehr oder weniger abgehoben werden kann.

Im hier beschriebenen Ausführungsbeispiel hat die Öffnung 13 eine Fläche von ca. 0,5cm x 0,5cm = 2,5 cm². Da der Gasgenerator einen Überschuss an Füllgas enthält, muss der Verschluss des Abströmventils 10 nicht dicht sein. Die Drosselwirkung für das nach außen drängende Gas ist in der Regel auch dann noch hinreichend, wenn bei geschlossenem Ventil ein schmaler Schlitz von ca. 0,1mm Breite verbleibt. Bei einem Ventilhub von ca. 1 mm entsteht eine freie Fläche von 0,25 cm² mit einer Schlitzbreite von 0,5mm, wenn die Wandstärke des Verbindungsteils 20 an der Ventilstelle 0,5mm beträgt. Bei 200 bar Gasdruck wirkt auf die Verschlussblende eine Kraft von 0,5 kN, der die Betätigungsmittel 15 entgegenwirken müssen. Geht man von einer Airbagaufblasdauer von ca. 30ms aus, so sollte ein voller Ventilhub nicht länger als 0,5ms dauern, um die Bewegungsgeschwindigkeit der Airbagvorderseite schnell regeln zu können. Diese Anforderung könnte beispielsweise mit einem entsprechend dimensionierten, schnellen Elektromagneten erfüllt werden, der das Verschlussteil 14 direkt betätigt.

Die Betätigungsmittel 15 können aber auch einen Piezosteller 17 umfassen, der auf hohe Kraftentfaltung gezüchtet ist. Der in Fig. 4 dargestellte Piezosteller 17 ist in Form eines 50mm hohen Piezostapels realisiert, das bei einer Antriebsspannung von 300V eine Dehnung von 0,125mm erfährt. Um damit einen Hub des Verschlussteils 14 von 1 mm zu erzielen, ist eine Hubübersetzung erforderlich, die sich beispielsweise mit Hilfe eines mechanischen Hebels 18 mit 8-facher Übersetzung realisieren lässt, wie in Fig. 4 dargestellt. Der Hebel 18 drückt hier mit einer Kraft von 0,4 Tonnen auf den Piezostapel, was dieser zwar in Kompressionsrichtung aushält nicht aber in Zug- und Scherrichtung. Deshalb muss der Piezosteller 17 hier so betrieben werden, dass das Abströmventil bei Dehnung des Piezostapels geöffnet wird.

## Patentansprüche

1. Insassenschutzvorrichtung, insbesondere für ein Kraftfahrzeug,
- mit mindestens einem Airbag (1),
- mit mindestens einem Gasgenerator (2) zum Befüllen des Airbags (1).
- mit einem Airbagsteuergerät (3) zum Aktivieren des Airbags (1),
- mit Mitteln (7) zum Erfassen der Entfaltungsgeschwindigkeit des Airbags (1) und
- mit Mitteln (6) zum Regeln der Befüllungsmenge des Airbags (1) unter Berücksichtigung seiner Entfaltungsgeschwindigkeit,
- mit mindestens einem Abströmventil (10), das zwischen dem Gasgenerator (2) und dem Airbag (1) angeordnet ist, und mit steuerbare Betätigungsmittel (15) für den Verschluss des Abströmventils, **dadurch gekennzeichnet, dass** die Betätigungsmittel (15) für den Verschluss des Abströmventils (10) mindestens einen Piezosteller (17) in Verbindung mit einer mechanischen oder hydraulischen Hebeleinrichtung (18) umfassen.

2. Insassenschutzvorrichtung nach Anspruch 1, **dadurch gekennzeichnet, dass** die Betätigungsmittel (15) für den Verschluss des Abströmventils (10) über das Airbagsteuergerät (3) abgesteuert werden.

3. Insassenschutzvorrichtung nach einem der Ansprüche 1 oder 2, **dadurch gekennzeichnet, dass** die Betätigungsmittel (15) für den Verschluss des Abströmventils (10) mindestens einen Elektromagneten umfassen.

4. Insassenschutzvorrichtung nach einem der Ansprüche 1 bis 3, **dadurch gekennzeichnet, dass** zum Befüllen des Airbags (1) ein Kaltgasgenerator mit einem Druckbehälter (21) verwendet wird, der mit einer unter Druck stehenden Edelgasmischung befüllt ist und durch eine Berstscheibe (22) verschlossen ist, die mit Hilfe einer pyrotechnischen Ladung (23) zerstört werden kann.

5. Insassenschutzvorrichtung nach einem der Ansprüche 1 bis 4, **dadurch gekennzeichnet, dass** die Mittel (7) zum Erfassen der Entfaltungsgeschwindigkeit des Airbags (1) eine Sende-/Empfangseinrichtung (24) umfassen, mit der optische Signale in den sich entfaltenden Airbag (1) ausgesendet werden können, und dass die Innenseite des Airbags (1) zumindest bereichsweise mit einer lichtreflektierenden Beschichtung (25) versehen ist.

6. Insassenschutzvorrichtung nach Anspruch 5, **dadurch gekennzeichnet, dass** die Entfaltungsgeschwindigkeit des Airbags (1) durch Laufzeitmessung, unter Ausnutzung des Doppler-Effekts oder eines Triangulationsverfahrens ermittelt wird.

## Claims

1. Occupant protection device, in particular for a motor vehicle,
- with at least one airbag (1),
- with at least one gas generator (2) for filling the airbag (1),
- with an airbag control device (3) for activating the airbag (1),
- with means (7) for detecting the deployment speed of the airbag (1), and
- with means (6) for regulating the amount of filling of the airbag (1) with the deployment speed thereof being taken into account,
- with at least one outlet valve (10) which is arranged between the gas generator (2) and the airbag (1), and with controllable actuating means (15) for the closure of the outlet valve, **characterized in that** the actuating means (15) for the closure of the outlet valve (10) comprise at least one piezo actuator (17) in conjunction with a mechanical or hydraulic lever device (18).

2. Occupant protection device according to Claim 1, **characterized in that** the actuating means (15) for the closure of the outlet valve (10) are activated via the airbag control device (3).

3. Occupant protection device according to either of Claims 1 and 2, **characterized in that** the actuating means (15) for the closure of the outlet valve (10) comprise at least one solenoid.

4. Occupant protection device according to one of Claims 1 to 3, **characterized in that**, in order to fill the airbag (1), use is made of a cold gas generator with a pressure container (21) which is filled with a pressurized noble gas mixture and is closed by a bursting disc (22) which can be destroyed with the aid of a pyrotechnic charge (23).

5. Occupant protection device according to one of Claims 1 to 4, **characterized in that** the means (7) for detecting the deployment speed of the airbag (1) comprise a transmitting/receiving device (24) with which optical signals can be sent to the deploying airbag (1), and **in that** at least some regions of the inside of the airbag (1) are provided with a light-reflecting coating (25).

6. Occupant protection device according to Claim 5, **characterized in that** the deployment speed of the airbag (1) is determined by a runtime measurement, measuring the Doppler effect or a triangular method.

## Revendications

1. Dispositif de protection d'occupant, en particulier pour un véhicule automobile,
- avec au moins un airbag (1),
- avec au moins un générateur de gaz (2) pour remplir l'airbag (1),
- avec un appareil de commande d'airbag (3) pour activer l'airbag (1),
- avec des moyens (7) pour détecter la vitesse de déploiement de l'airbag (1) et
- avec des moyens (6) pour réguler la quantité de remplissage de l'airbag (1) en tenant compte de sa vitesse de déploiement,
- avec au moins une soupape d'échappement (10) qui est disposée entre le générateur de gaz (2) et l'airbag (1), et avec des moyens d'actionnement commandables (15) pour la fermeture de la soupape d'échappement, **caractérisé en ce que** les moyens d'actionnement (15) pour la fermeture de la soupape d'échappement (10) comprennent au moins un actionneur piézoélectrique (17) en liaison avec un dispositif de levier mécanique ou hydraulique (18).

2. Dispositif de protection d'occupant selon la revendication 1, **caractérisé en ce que** les moyens d'actionnement (15) pour la fermeture de la soupape d'échappement (10) sont commandés par le biais de l'appareil de commande d'airbag (3).

3. Dispositif de protection d'occupant selon l'une quelconque des revendications 1 ou 2, **caractérisé en ce que** les moyens d'actionnement (15) pour la fermeture de la soupape d'échappement (10) comprennent au moins un électroaimant.

4. Dispositif de protection d'occupant selon l'une quelconque des revendications 1 à 3, **caractérisé en ce que** pour remplir l'airbag (1), on utilise un générateur de gaz froid, avec un récipient sous pression (21), qui est rempli d'un mélange de gaz nobles sous pression, et qui est fermé par un disque d'éclatement (22) qui peut être détruit à l'aide d'une charge pyrotechnique (23).

5. Dispositif de protection d'occupant selon l'une quelconque des revendications 1 à 4, **caractérisé en ce que** les moyens (7) pour détecter la vitesse de déploiement de l'airbag (1) comprennent un dispositif émetteur/récepteur (24), avec lequel des signaux optiques peuvent être envoyés dans l'airbag (1) qui se déploie, et **en ce que** le côté intérieur de l'airbag (1) est pourvu au moins en partie d'un revêtement réfléchissant la lumière (25).

6. Dispositif de protection d'occupant selon la revendication 5, **caractérisé en ce que** la vitesse de déploiement de l'airbag (1) est détectée par une mesure de la durée, en utilisant l'effet Doppler ou un procédé de triangulation.
